# EUROPÄISCHE PATENTSCHRIFT

(11) **EP 0 637 502 B1**
(45) Veröffentlichungstag und Bekanntmachung des Hinweises auf die Patenterteilung: **07.10.1998**
(21) Anmeldenummer: 94111460.5
(22) Anmeldetag: 22.07.1994
(51) Int. Cl.: B29C 70/52, B29B 15/14, B29B 15/12

(54) **Verfahren zur Herstellung faserverstärker Verbundwerkstoffe**
Process for the fabrication of fibre reinforced composite materials
Procédé pour la fabrication de matériaux composites renforcés par des fibres

(30) Priorität: 28.07.1993 DE 4325260
(43) Veröffentlichungstag der Anmeldung: 08.02.1995
(73) Patentinhaber: Ticona GmbH, 65926 Frankfurt am Main (DE)
(72) Erfinder: Pfeiffer, Bernhard, Dr., D-65779 Kelkheim (DE); Skaletz, Detlef, Dr., D-55128 Mainz (DE); Heckel, Horst, D-64285 Darmstadt (DE); Texier, Anne, F-59000 Lille (FR); Heydweiller, Joachim, D-65428 Rüsselsheim (DE)

(56) Entgegenhaltungen:
- EP-A- 0 368 412
- EP-A- 0 455 149
- US-A- 3 470 051
- US-A- 4 743 413

## Beschreibung

Die Erfindung betrifft ein Verfahren zur Herstellung faserverstärkter Verbundwerkstoffe mit konstantem Fasergehalt.

Die Herstellung von faserverstärkten Verbundwerkstoffen erfolgt bekannterweise durch Schmelz-Pultrusionsverfahren.

Bei der Schmelz-Pultrusion wird ein Faserstrang durch eine Thermoplastschmelze gezogen und dabei mit dem aufgeschmolzenen Matrixpolymer benetzt. Über Nachform- oder Abstreifvorrichtungen (Spalt, Düse usw.) wird der Fasergehalt eingestellt.

Aufgrund der hohen Viskosität von Thermoplastschmelzen kann es zur unvollständigen Durchtränkung des Faserstranges kommen (lange Fließwege im Strang). Um eine ausreichende Durchdringung des Faserstranges mit Schmelze zu erzielen, wird bei den gängigen Pultrusionsverfahren der geschlichtete Faserstrang vor dem Eintritt in das Imprägnierwerkzeug oder innerhalb des Werkzeuges durch geeignete Einrichtungen thermisch oder vorwiegend mechanisch aufgespreizt bzw. geöffnet.

Im Verfahren nach der EP-PS 056 703 wird der Faserstrang mittels Faservorspannung durch gleichzeitiges Leiten über Stäbe zur Umlenkung geöffnet. Dies kann bei hoher Vorspannung zu Faserschädigung bzw. zu Faserbruch führen. Dabei entstehender Faserabrieb verursacht eine Verunreinigung des Pultrusionswerkzeuges und durch Anreicherung von Faserbruchstücken kommt es bei kontinuierlichen Prozessen oft zum Strangabriß.

Nach dem Verfahren gemäß EP-PS 415 517 wird die Imprägnierung des Stranges dadurch verbessert, daß die Polymerschmelze durch den Strang gepreßt wird. Die Strangöffnung erfolgt auch in diesem Fall durch eine mechanische Kraft, die zwangsweise auch zur Faserschädigung führt. Weiterhin sind Verfahren ganz anderer Art zur Herstellung von Faserverbundwerkstoffen bekannt.

Nach EP-PS 274 464 werden zur Behandlung von Fasersträngen Dispersionen eingesetzt, die Polymerpulver in flüssiger oder fester Phase dispergiert enthalten. Die Partikel werden auf die Verstärkungsfaser als Strahl unter einem bestimmten Winkel aufgesprüht. Hierbei findet eine Aufspreizung des Faserstranges statt. Gleichzeitig mit der Strangaufweitung wird die Faser mit dem Behandlungsmittel von beiden Seiten beschichtet.

Bei einem Verfahren gemäß deutscher Offenlegungsschrift 4121 915 wird eine flüssige Polymerpulverdisperion zur Imprägnierung des Faserstranges verwendet. Das Thermoplastpulver wird auf den in Längsrichtung durch die Pulverdispersion bewegten Faserstrang aufgegeben, aus diesem Strang das Dispergiermittel entfernt, beispielsweise durch Aufheizen, dann der Thermoplast aufgeschmolzen und der Verbundwerkstoff, beispielsweise durch Walzen konsolidiert.

Bei diesen Verfahren bereitet die Abscheidung gleichbleibender Pulvermengen auf dem durch das Dispersionsbad laufenden Faserstrang Schwierigkeiten. Der Polymergehalt im Verbundwerkstoff hängt von dem Feststoffgehalt des Dispersionsbades ab.
Die Konzentration in unmittelbarer Umgebung des Stranges schwankt und entspricht nicht immer exakt der mittleren Konzentration der nachgelieferten Dispersion. Diese Schwankungen der Thermoplastmenge auf dem Faserstrang treten besonders bei hohen Feststoffgehalten im Beschichtungsbad auf. Sie machen sich im Endprodukt sehr ungünstig bemerkbar, weil dadurch der Fasergehalt und die genauen Abmessungen der erzeugten Verbundwerkstoffe beeinflußt werden.

Abhilfe wird gemäß einem bekannten Verfahren nach US-PS 4,626,306 dadurch geschaffen, daß der pulverbeladene Faserstrang nach Verlassen des Dispersionsbades durch einen Walzenspalt geführt wird, um überschüssiges Polymerpulver zusammen mit dem Dispergiermittel aus dem Strang herauszupressen. Jedoch besteht hierbei die Gefahr der Faserschädigung, wobei sich gebrochene Filamente bilden und auf den Kalibrierrollen aufwickeln können.

Gemäß US-PS 4,680,224 wird der Faserstrang nach der Pulverbeladung in einer beheizten Düse kalibriert. In der Düse tritt Faserbruch auf, es werden maximale Abzugsgeschwindigkeiten von 30,5 cm/min erreicht.
Fasergehalte über 45 Vol.-% führen bei Verwendung der Düse erfahrungsgemäß zur Strangabriß.

Bei dem oben erwähnten Verfahren gemäß deutscher Offenlegungsschrift 4121 915 wird der Thermoplastanteil des faserverstärkten Verbundwerkstoffs dadurch konstant gehalten, daß man den Thermoplastgehalt des aus dem Dispersionsbad austretenden Faserstranges anhand seiner Breite bestimmt und diesen zur Regelung des Feststoffgehaltes im Dispersionsbad benutzt. Für eine Mehrstranganlage kann für verschiedene Stränge, die im gleichen Bad beschichtet werden, eine unterschiedliche Auslaufbreite resultieren. Geregelt werden kann aber nur die integrale Badkonzentration. Nachteilig ist also, daß der gesamte Thermoplastanteil im Bad aufgebracht und dort geregelt werden muß. Ein weiterer Nachteil der Imprägnierung mit Pulverdispersionen ist der hohe Verbrauch an im Vergleich zum Granulaten meist wesentlich teureren Thermoplastpulvern.

Es bestand daher die Aufgabe, bei der Herstellung faserverstärkter Verbundwerkstoffe eine faserschonende Öffnung des Faserstranges bei gleichzeitiger Gewährleistung eines konstanten Fasergehaltes zu erreichen.

Erfindungsgemäß wurde diese Aufgabe dadurch gelöst, daß der Faserstrang zunächst durch eine bewegte wäßrige Thermoplastpulver-Dispersion über Umlenkkörper gezogen, das Dispergiermittel entfernt, das Thermoplastpulver auf die Fasern aufgeschmolzen und nachfolgend der Faserstrang in einer Schmelz-Pultrusion imprägniert wird. Dabei wird der Faserstrang vorzugsweise mit einer Geschwindigkeit von mindestens 3 m/min durch die Thermoplastpulver-Dispersion gezogen.
Die Imprägnierung des Faserstranges mit Polymeren erfolgte zu mehr als 90 % in der Schmelz-Pultrusion.

Die mit dem erfindungsgemäßen Verfahren erzielten Vorteile bestehen darin, daß im Gegensatz zur Schmelzpultrusion ohne Vorbehandlungsschritt bei der Vorimprägnierung von Fasersträngen durch Abscheidung von Pulvern aus Dispersionen eine faserschonende Öffnung des Faserstranges möglich ist. Damit werden Faserschädigungen und Einwirkung mechanischer Kräfte zur Aufspreizung vermieden.

Im anschließenden Schritt der Schmelzpultrusion ist im vorkonsolidierten Faserstrang durch die Pulverkörner zwischen den Faserfilamenten die Aufspreizung konserviert. Deshalb sind hier hohe mechanische Kräfte zur Faseraufspreizung, nicht erforderlich. Beim Einlauf des Faserstranges in das Pultrusionswerkzeug ist der pulverbeladene Faserstrang robuster gegen mechanische Einflüsse.

Durch die Vorbehandlung ist neben der Verbesserung der Produktqualität durch geringere Faserschädigung und bessere Imprägnierung jeder einzelnen Faser des Faserstranges eine Steigerung der Liniengeschwindigkeit möglich, da bei den bekannten Pultrusionsverfahren die Produktionsgeschwindigkeit durch die Strangöffnung begrenzt wird. Hinzu kommt eine Produktivitätssteigerung, da im kontinuierlichen Betrieb ein Strangabriß durch Anreicherung des Faserabriebs und Verstopfung des Pultrusionswerkzeuges seltener eintritt. Weitere Vorteile des erfindungsgemäßen Verfahrens sind der geringe Verbrauch an Thermoplastpulver, da die Imprägnierung des Faserstranges überwiegend in der Schmelz-Pultrusion unter Einsatz von Polymergranulaten erfolgt. Gleichzeitig wird ein konstanter Fasergehalt erreicht.

Mit diesem Verfahren können unterschiedlichste Faserverbundwerkstoffe aus Thermoplasten hergestellt werden. Dabei ist auch die Verwendung verschiedener Polymere möglich.

Die erhaltenen Faserverbundwerkstoffe können als Halbzeug für Filament Winding, Laminieren u.s.w. wie auch als Schnittmaterial für Plastifizieren/Pressen, Blasformen und Spritzguß eingesetzt werden. Besondere Vorteile bestehen, wenn das Produkt als Profil ohne einen zusätzlichen Verarbeitungsschritt angewandt wird.

Es können Thermoplaste im weitesten Sinne, d. h. Stoffe, die sich reversibel oder intermediär thermoplastisch verhalten, eingesetzt werden. Das Matrixpolymer muß einen niedrigeren Erweichungs- bzw. Schmelzpunkt besitzen als das Material der Verstärkungsfasern.

Die Thermoplaste können als Homopolymere, als Mischpolymere z. B. Copolymere, Blockpolymere, oder als Polymergemische vorliegen.

Die Fasergehalte bewegen sich im Bereich von 10 bis 75 Vol.-%.
Das erfindungsgemäße Verfahren wird durch die nachfolgenden Beispiele näher erläutert.

### Beispiel 1

Drei Kohlefaserstränge mit je 1200 tex einer handelsüblichen Type mit einem Filamentdurchmesser von 10 Mikrometer wurden mit einer Geschwindigkeit von 3,2 m/min durch eine wäßrige Thermoplastpulver-Dispersion gezogen. Das Pulver hatte eine Korngröße unter 20 Mikrometer. Die Faserstränge wurden dabei über 5 Stifte geführt. Der Gesamt-Umschlingungswinkel eines jeden Faserstranges betrug 250°. Das Absetzen der Dispersion wurde durch mechanisches Rühren verhindert. Mit Ultraschall wurden zusätzlich Agglomerate zerstört.

Die Dispersion wurde aus 2 l Wasser, 950 g eines handelsüblichen Polyphenylensulfides unter Zusatz von 8 ml eines üblichen nichtionischen Tensids hergestellt und im Verhältnis 1:4 verdünnt. Dabei betrug der Feststoffgehalt etwa 6 Gew.-%.

Zur Entfernung des Dispergiermittels wurde jeder Faserstrang abgeblasen, in einem Dreizonentrockenofen bei 450/250/250°C im Luft-Gegenstrom getrocknet und dabei das Pulver auf die Fasern aufgeschmolzen. An verschiedenen Proben wurde mit 86 %iger HNO₃ das PPS herausgelöst und so der Fasergehalt zu ca. 93 bis 97 Gew.-% bestimmt.
Mit diesem Verfahren wurden die Faserstränge schonend von einer Einlaufbreite von 4 bis 6 mm auf eine Auslaufbreite von 25 bis 35 mm geöffnet und günstige Faserverteilung erzielt.

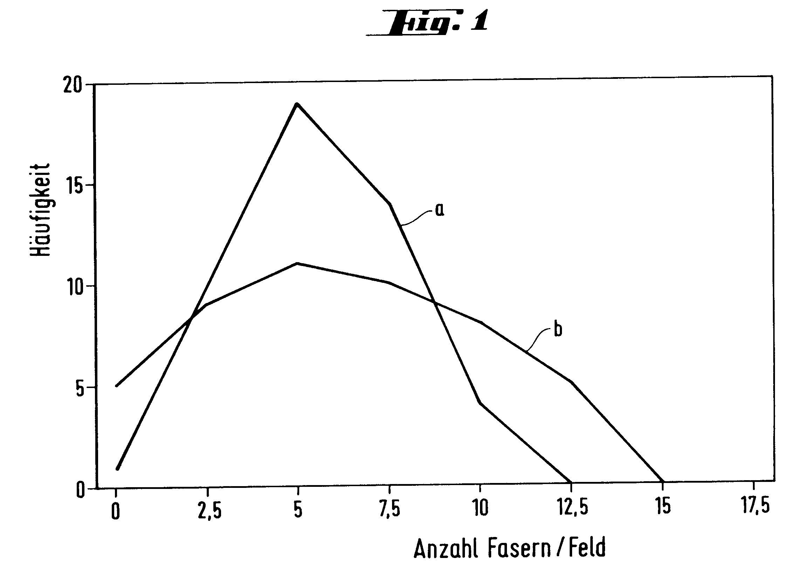

Figur 1, Kurve a) zeigt die Verteilungskurve der Fasern in einem Querschnitt eines Faserstrangs nach anschließender Schmelzpultrusion.
Kurve b) zeigt die Verteilung der Fasern ohne erfindungsgemäße Vorbehandlung (Vergleichsversuch).

Um diese Kurven zu erhalten, wurden im Querschnitt des imprägnierten Stranges ca. 10Felder zu je 0,5x0,5 mm herausgegriffen und in ein Raster mit etwa 46 gleich großen Rasterfeldern zerschnitten. In jedem Rasterfeld wurden die enthaltenen Fasern gezählt. Die Häufigkeit von Rasterfeldern mit gleicher Faserzahl wurde gegen die Faserzahl pro Rasterfeld aufgetragen.
Die Anzahl 11 bei dem Abszissenwert 5 (Kurve b) bedeutet, daß 11 Rasterfelder jeweils 2,5 bis 5 Fasern enthalten haben. Man erkennt, daß mit Vorbehandlung der Faser (Kurve a) die Fasern gleichmäßiger verteilt sind als ohne Vorbehandlung (Kurve b).

Die Faserstränge wurden nachfolgend mit geschmolzenem Polyphenylensulfid bei einer Geschwindigkeit von über 3 m/min in einer Schmelz-Pultrusion imprägniert. Der erzielte Fasergehalt betrug 50 Gew.-% ± 3 %.

### Beispiel 2

Drei Glasfaserstränge mit 1200 tex und einem Einzelfilamentdurchmesser von 17 Mikrometer wurden mit einer Geschwindigkeit von 3,75 m/min analog Beispiel 1 durch eine wäßrige Thermoplastpulverdispersion gezogen. Als Thermoplastpulver wurde ein handelsübliches Polypropylen mit Stabilisatoren in einer Korngröße unter 20 Mikrometer verwendet. Als Dispersionshilfsmittel diente ein nichtionisches Tensid. Der Feststoffgehalt der Dispersion betrug 1,25 %. Die Faserstränge wurden über 5 Stifte mit einem Gesamt-Umschlingungswinkel von 250 Grad geführt. Das Absetzen der Dispersion wurde durch mechanisches Rühren verhindert. Mit Ultraschall wurden zusätzlich Agglomerate zerstört. Zur Entfernung des Dispergiermittels wurde jeder Faserstrang analog Beispiel 1 abgeblasen, getrocknet und das Pulver auf die Fasern aufgeschmolzen. Dabei wurde eine deutliche Faseröffnung ohne Einwirkung mechanischer Kräfte erzielt.
Einlaufbreite eines Faserstranges: 3 bis 4 mm
Auslaufbreite eines Faserstranges: 15 bis 17 mm

Die Faserstränge wurden nachfolgend mit geschmolzenem Polypropylen in einer Schmelz-Pultrusion imprägniert. Es wurde ein Fasergehalt von 50 Gew.-% ± 2 % erreicht.

## Patentansprüche

1. Verfahren zur Herstellung faserverstärkter Verbundwerksktoffe mit Endlosfasersträngen, wobei der Faserstrang durch eine bewegte wäßrige Thermoplastpulver-Dispersion über Umlenkkörper gezogen, das Dispergiermitel entfernt, das Thermoplastpulver auf die Fasern aufgeschmolzen und nachfolgend der Faserstrang in einer Schmelz-Pultrusion imprägniert wird.

2. Verfahren nach Anspruch 1, dadurch gekennzeichnet, daß die Imprägnierung des Faserstranges zu mehr als 90 % durch die Schmelz-Pultrusion erfolgt.

3. Verfahren nach Anspruch 1, dadurch gekennzeichnet, daß der Faserstrang mit einer Geschwindigkeit von mindestens 3 m/min durch die wäßrige Thermoplastpulver-Dispersion gezogen wird.

## Claims

1. A process for producing fiber-reinforced composites with continuous fiber strands, which comprises pulling the fiber strand through an agitated aqueous thermoplastic powder dispersion via deflectors, removing the dispersing medium, melting the thermoplastic powder onto the fibers, and subsequently impregnating the fiber strand in a melt pultrusion.

2. The process of claim 1, characterized in that more than 90% of the impregnation of the fiber strand is effected by the melt pultrusion.

3. The process of claim 1, characterized in that the fiber strand is pulled through the aqueous thermoplastic powder dispersion at a speed of at least 3 m/min.

## Revendications

1. Procédé de fabrication de matériaux composites renforcés par des fibres avec des écheveaux de filaments, l'écheveau de fibres étant tiré au travers d'une dispersion aqueuse de poudre de matériau thermoplastique sous agitation sur un élément de renvoi, le milieu de dispersion étant éliminé, la poudre de matériau thermoplastique étant fondue sur les fibres, et ensuite l'écheveau de fibres étant imprégné lors d'une pultrusion à l'état fondu.

2. Procédé suivant la revendication 1, caractérisé en ce que l'imprégnation de l'écheveau de fibres est réalisée à plus de 90% par la pultrusion à l'état fondu.

3. Procédé suivant la revendication 1, caractérisé en ce que l'écheveau de fibres est tiré à une vitesse d'au moins 3 m/min au travers de la dispersion aqueuse de poudre de matériau thermoplastique.
